# EUROPEAN PATENT APPLICATION

(11) **EP 3 723 382 A1**
(43) Date of publication of application: **14.10.2020**
(21) Application number: 20165088.4
(22) Date of filing: 24.03.2020
(51) Int. Cl.: H04N 21/4425, H04N 21/4227, H04N 17/04

(54) **METHOD FOR REMOTELY CONTROLLING A VIDEO PLAYING TERMINAL**

(30) Priority: 12.04.2019 CN 201910295292
(71) Applicant: Amlogic (Shanghai) Co., Ltd., Shanghai 201203 (CN)
(72) Inventor: NIE, Yixing, Pudong, Shanghai 201203 (CN)
(74) Representative: Cabinet Chaillot

(57) **Abstract**

The invention relates to a method for remotely controlling a video playing terminal, the video playing terminal comprises an operating system, the operating system is provided with a television desktop layer, a system layer and an application layer, wherein the method comprises the steps of: Step S1, providing a screen capture interface for the system layer; Step S2, calling the screen capture interface in the application layer to obtain a screen capture image sequence; and Step S3, sending the screen capture image sequence to the television desktop layer, providing, by the television desktop layer, an operation interface corresponding to a screen capture image, and converting an operation instruction of a user into a control instruction of the television desktop layer through a remote operation of the operation interface so as to remotely control the video playing terminal.

## Description

### BACKGROUND OF THE INVENTION

### 1. Field of the Invention

The invention relates to the technical field of video playing terminals, and more particularly, to a method for remotely controlling a video playing terminal.

### 2. Description of the Related Art

A terminal device is to input programs and data to a computer or to receive processing results output from the computer via a communication facility. The terminal device is usually arranged in a place where it is convenient to be connected to a remote computer via the communication facility. The terminal device is mainly composed of a communication interface control device, and a dedicated or selected input and output device. A system for connecting a plurality of dispersed terminal devices to the computer via the communication facility is referred to as an on-line system. When a small amount of frequently used information needs to be input to the computer, or when it is desired to query for computer information database, a keyboard display terminal device, which is easy to operate, is often used.

In the prior art, abnormal conditions, such as jamming, blurred screen and image problems, may occur in the sold video terminal device when the user brings the terminal device home. In order to solve the above-mentioned problems, users generally choose to contact after-sales service staff for replacement or return of goods. In this way, the process is complex, the cost is high, the time is consumed, and the user experience is lowered. Therefore, there is a need for an effective method for solving the above-mentioned problems.

### SUMMARY OF THE INVENTION

Given that the foregoing problems exist in the prior art, the present invention provides a method for remotely controlling a video playing terminal.

The technical solution is as follows:
a method for remotely controlling a video playing terminal, the video playing terminal comprising an operating system, the operating system being provided with a television desktop layer, a system layer and an application layer, wherein the method comprises the steps of:
   Step S1, providing a screen capture interface for the system layer;
   Step S2, calling the screen capture interface in the application layer to obtain a screen capture image sequence; and
   Step S3, sending the screen capture image sequence to the television desktop layer, providing, by the television desktop layer, an operation interface corresponding to a screen capture image, and converting an operation instruction of a user into a control instruction of the television desktop layer through a remote operation of the operation interface so as to remotely control the video playing terminal.

Preferably, wherein in Step S1, video processing is performed via the screen capture interface, the video processing comprises the steps of:
providing a video acquisition unit for acquiring video information of the system layer;
providing a video input unit for inputting the video information;
providing a video conversion unit for converting a data format of the video information; and
providing a processing unit for processing the video information after the data format of the video information is converted.

Preferably, wherein in Step S1, the screen capture interface comprises at least three screen capture modes.

Preferably, wherein each of the at least three screen capture modes comprises:
capturing the video information only;
capturing the video information and a screen menu;
capturing the screen menu only.

Preferably, wherein in Step S2, calling the screen capture interface in the application layer at a preset time period to obtain the screen capture image sequence.

Preferably, wherein the preset time period is set to at least 50 ms.

Preferably, wherein in Step S3, sending the screen capture image sequence to the television desktop layer in a preset step size.

Preferably, wherein the preset step size is set to at least 10.

Preferably, wherein in Step S3, manipulating the video playing terminal by remote debugging or by remote restoring factory settings.

By adopting the above-mentioned technical solutions, the present invention has the beneficial effects that a method for remotely controlling a video playing terminal is provided to analyze the problems existing in the sold video playing terminal and to help a user find the problems in time, abnormal conditions, such as jamming, blurred screen and image problems of the video playing terminal, are effectively solved through remote operation, and the method is simple in implementation mode, easy to operate and wide in application range.

### BRIEF DESCRIPTION OF THE DRAWINGS

The accompanying drawings, together with the specification, illustrate exemplary embodiments of the present disclosure, and, together with the description, serve to explain the principles of the present invention.
Figure 1 is a flowchart illustrating steps of a method for remotely controlling a video playing terminal according to an embodiment of the present invention; and
Figure 2 is flowchart illustrating steps of a video processing according to an embodiment of the present invention.

### DETAILED DESCRIPTION

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated.

As used herein, the term "plurality" means a number greater than one.

Hereinafter, certain exemplary embodiments according to the present disclosure will be described with reference to the accompanying drawings.

The invention comprises a method for remotely controlling a video playing terminal, the video playing terminal comprising an operating system, the operating system being provided with a television desktop layer, a system layer and an application layer, wherein the method comprises the steps of:
Step S1, providing a screen capture interface for the system layer;
Step S2, calling the screen capture interface in the application layer to obtain a screen capture image sequence; and
Step S3, sending the screen capture image sequence to the television desktop layer, providing, by the television desktop layer, an operation interface corresponding to a screen capture image, and converting an operation instruction of a user into a control instruction of the television desktop layer through a remote operation of the operation interface so as to remotely control the video playing terminal.

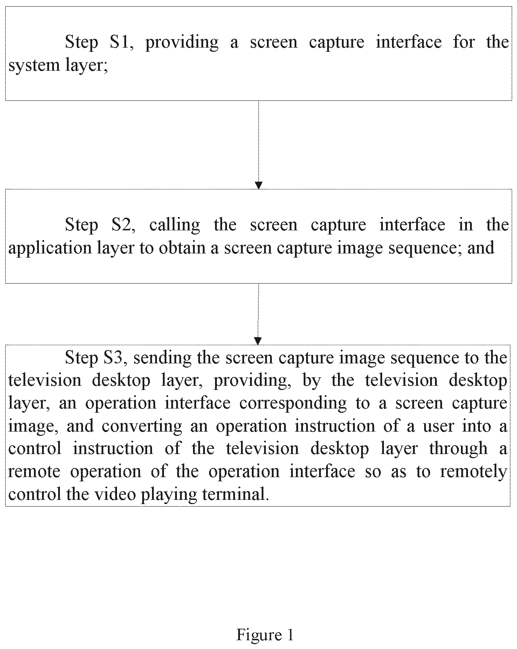

By adopting the above-mentioned technical solution, as shown in Figure 1, a method for remotely controlling a video playing terminal is provided to analyze the problems existing in the sold video playing terminal and to help a user find the problems with the video playing terminal in time. Then the user contacts the after-sales service staff. The staff will tell the user to turn on a switch on the video playing terminal, and the staff may operate the terminal remotely. The technical problem to be solved is that the video playing terminal of the user may be controlled remotely. During this remote operation, the staff is able to detect the problems in the video playing terminal. Abnormal conditions such as jamming, blurred screen and image problems of Android televisions are solved by remote debugging or by remote restoring factory settings.

In the above-mentioned technical solution, the video playing terminal may be an Android television. The Android television has an Android operating system, so that the television becomes more intelligent, enabling the television to play the same functions, such as browsing webs, watching videos and movies, chatting, doing office work and playing games, as tablets and smart phones. The technical solution is used to analyze the problems existing in the sold Android television and to help a user find the problems with the Android television in time. Then the user contacts the after-sales service staff. The staff will tell the user to turn on a switch on the Android television, and the staff may operate the Android television remotely. The technical problem to be solved is that the Android television of the user may be controlled remotely, and it is able to detect the problems existing in the video playing terminal.

Furthermore, the Android television comprises an operating system, the operating system is provided with a television desktop layer, a system layer and an application layer. In the above-mentioned technical solution, first of all, a screen capture interface is provided for the system layer. Preferably, the screen capture interface comprises at least three screen capture modes, comprising: capturing the video information only; capturing the video information and a screen menu; and capturing the screen menu only.

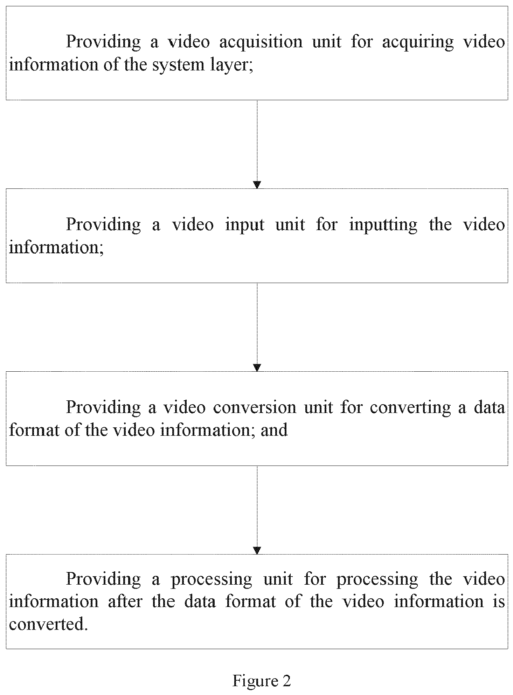

Specifically, video processing is performed via the screen capture interface, as shown in Figure 2, the video processing comprises the steps of: providing a video acquisition unit for acquiring video information of the system layer; providing a video input unit for inputting the video information; providing a video conversion unit for converting a data format of the video information; and providing a processing unit for processing the video information after the data format of the video information is converted.

Furthermore, calling the screen capture interface in the application layer to obtain a screen capture image sequence. Specifically, calling the screen capture interface in the application layer at a preset time period to obtain the screen capture image sequence, that is, performing a screen capture process at a preset time period. Wherein, the preset time period is set to at least 50 ms.

Furthermore, sending the screen capture image sequence to the television desktop layer, providing, by the television desktop layer, an operation interface corresponding to a screen capture image, and converting an operation instruction of a user into a control instruction of the television desktop layer through a remote operation of the operation interface so as to remotely control the video playing terminal. Specifically, sending the screen capture image sequence to the television desktop layer in a preset step size, wherein, the preset step size is set to at least 10. That is, sending a screen capture image sequence with the preset step size to the television desktop layer according to the screen capture image sequence.

Furthermore, manipulation of the video playing terminal can be achieved by remote debugging or by remote restoring factory settings, so that the video playing terminal of the user can be controlled remotely. In this way, the staff is able to detect the problems in the video playing terminal. Abnormal conditions such as jamming, blurred screen and image problems of Android televisions are solved by remote debugging or by remote restoring factory settings.

In a further embodiment, the problems in the Android television may be detected by remotely controlling the Android television of the user. Abnormal conditions such as jamming, blurred screen and image problems of Android televisions are solved by remote debugging or by remote restoring factory settings.

Furthermore, a method for remotely controlling a video playing terminal is provided to analyze the problems existing in the sold Android televisions and to help a user find the problems in time, abnormal conditions such as jamming, blurred screen and image problems of the Android televisions are effectively solved through remote operation, and the method is simple in implementation mode, easy to operate and wide in application range.

It should be noted that the technical solution is applied to a video playing terminal, wherein the video playing terminal comprises, but is not limited to an Android television. And details will not be repeated herein.

The above descriptions are only the preferred embodiments of the invention, not thus limiting the embodiments and scope of the invention. Those skilled in the art should be able to realize that the schemes obtained from the content of specification and drawings of the invention are within the scope of the invention.

## Claims

1. A method for remotely controlling a video playing terminal, the video playing terminal comprising an operating system, the operating system being provided with a television desktop layer, a system layer and an application layer, wherein the method comprises the steps of:
Step S1, providing a screen capture interface for the system layer;
Step S2, calling the screen capture interface in the application layer to obtain a screen capture image sequence; and
Step S3, sending the screen capture image sequence to the television desktop layer, providing, by the television desktop layer, an operation interface corresponding to a screen capture image, and converting an operation instruction of a user into a control instruction of the television desktop layer through a remote operation of the operation interface so as to remotely control the video playing terminal.

2. The method for remotely controlling a video playing terminal of claim 1, wherein in Step S1, video processing is performed via the screen capture interface, the video processing comprises the steps of:
providing a video acquisition unit for acquiring video information of the system layer;
providing a video input unit for inputting the video information;
providing a video conversion unit for converting a data format of the video information; and
providing a processing unit for processing the video information after the data format of the video information is converted.

3. The method for remotely controlling a video playing terminal of claim 1, wherein in Step S1, the screen capture interface comprises at least three screen capture modes.

4. The method for remotely controlling a video playing terminal of claim 3, wherein each of the at least three screen capture modes comprises:
capturing the video information only;
capturing the video information and a screen menu;
capturing the screen menu only.

5. The method for remotely controlling a video playing terminal of claim 1, wherein in Step S2, calling the screen capture interface in the application layer at a preset time period to obtain the screen capture image sequence.

6. The method for remotely controlling a video playing terminal of claim 5, wherein the preset time period is set to at least 50 ms.

7. The method for remotely controlling a video playing terminal of claim 1, wherein in Step S3, sending the screen capture image sequence to the television desktop layer in a preset step size.

8. The method for remotely controlling a video playing terminal of claim 7, wherein the preset step size is set to at least 10.

9. The method for remotely controlling a video playing terminal of claim 1, wherein in Step S3, manipulating the video playing terminal by remote debugging or by remote restoring factory settings.
